# EUROPEAN PATENT SPECIFICATION

(11) **EP 2 355 203 B1**
(45) Date of publication and mention of the grant of the patent: **20.03.2013**
(21) Application number: 11150361.1
(22) Date of filing: 07.01.2011
(51) Int. Cl.: H01M 2/02, H01M 2/10, H01M 2/36

(54) **Secondary battery and method of manufacturing secondary battery**
Sekundärbatterie und Verfahren zur Herstellung einer Sekundärbatterie
Batterie secondaire et procédé de fabrication de batterie secondaire

(30) Priority: 03.02.2010 KR 20100009907
(43) Date of publication of application: 10.08.2011
(73) Proprietor: Samsung SDI Co., Ltd., Gyeonggi-do (KR); Robert Bosch GmbH, 70442 Stuttgart (DE)
(72) Inventor: Moon, Jongseok, Gyeonggi-do (KR); Ahn, Byungkyu, Gyeonggi-do (KR)
(74) Representative: Gulde Hengelhaupt Ziebig & Schneider

(56) References cited:
- WO-A1-2009/131894
- WO-A1-2009/150912
- JP-A- 2005 294 150
- US-A1- 2008 008 927

## Description

The present invention relates to a secondary battery and a method of manufacturing the secondary battery.

### Description of the Related Art

Lithium ion secondary batteries typically have higher output and higher capacity, and are more lightweight than other types of secondary batteries, and, therefore, lithium ion secondary batteries are being widely used, such as in hybrid vehicles and electric vehicles.

A secondary battery is typically manufactured by inserting an electrode assembly in a case, sealing the case with a cap plate, and then injecting electrolyte into the case through an electrolyte injection hole disposed in the cap plate.

WO 2009/150912 A1 and JP 2005-294150 A disclose secondary batteries comprising a porous insulating bag accommodating the electrolyte assembly.

### SUMMARY

According to the present invention, a secondary battery is configured to prevent or reduce a short circuit between an electrode assembly and a case, and has improved efficiency in injecting electrolyte, and a method of manufacturing the secondary battery is provided.

According to the present invention, there is provided the secondary batter of claim 1. Further, there is provided a corresponding manufacturing method of claim 9. Preferred embodiments are aspects of the depending claims.

### BRIEF DESCRIPTION OF THE DRAWINGS

The above and other features and advantages will become more apparent to those of ordinary skill in the art by describing in detail some exemplary embodiments of the present invention with reference to the attached drawings. The drawings illustrate some exemplary embodiments of the present invention and, together with the description, serve to explain principles and provide a further understanding of the present invention.

FIGS. 1A through 1C are, respectively, a perspective view, a vertical cross-sectional view, and a horizontal cross-sectional view, of a secondary battery according to an embodiment of the present invention;

FIG. 2 is a flowchart illustrating a method of manufacturing a secondary battery according to an embodiment of the present invention;

FIGS. 3A through 3G are schematic views illustrating a method of manufacturing a secondary battery according to an embodiment of the present invention; and

FIGS. 4A through 4G are schematic views illustrating a method of manufacturing a secondary battery according to another embodiment of the present invention.

### DETAILED DESCRIPTION

Some exemplary embodiments will now be described more fully hereinafter with reference to the accompanying drawings.

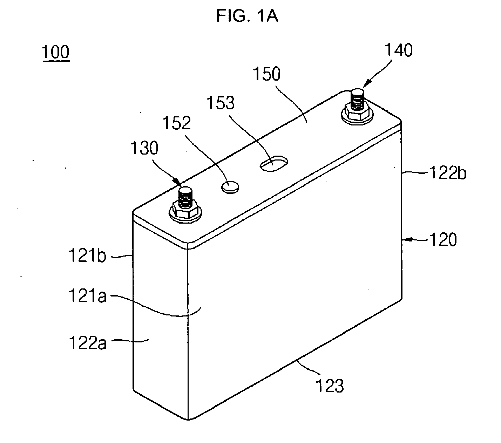

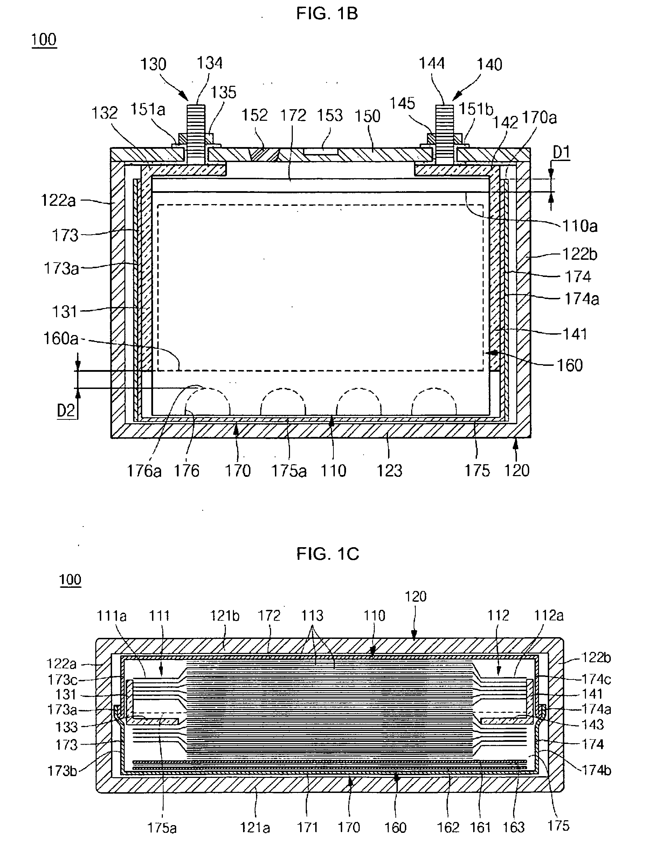

A configuration of a secondary battery according to one embodiment of the present invention will now be described with reference to FIGS. 1A through 1C.

FIGS. 1A through 1C are, respectively, a perspective view, a vertical cross-sectional view, and a horizontal cross-sectional view illustrating a secondary battery.

Referring to FIGS. 1A through 1C, a secondary battery 100 includes an electrode assembly 110, a case 120, a first electrode terminal 130, a second electrode terminal 140, a cap plate 150, a safety member 160, and an insulating bag 170.

The electrode assembly 110 includes a first electrode 111, a second electrode 112, and a separator 113. The electrode assembly 110 may have generally a wound jelly roll shape or a stacked shape. In one embodiment, the first electrode 111 is a positive electrode plate, and the second electrode 112 is a negative electrode plate. In another embodiment, the first electrode 111 is a negative electrode plate, and the second electrode 112 is a positive electrode plate. The first electrode 111 may include a first metal plate or metal foil and a first active material. The first electrode 111, in one embodiment, includes a first non-coating portion 111 a without an active material (e.g., a positive active material), and the first non-coating portion 111a may protrude outward from a side of the separator 113. In one embodiment, the first electrode 111 is a positive electrode plate formed of aluminum (e.g., an aluminum foil), and the first active material is formed of lithium based oxide. The second electrode 112 may include a second metal plate or metal foil and a second active material. The second electrode 112, in one embodiment, includes a second non-coating portion 112a without an active material (e.g., a negative active material), and the second non-coating portion 112a may protrude outward from another side of the separator 113. That is, protruding directions of the first and second non-coating portions 111 a and 112a may be opposite to each other with respect to the separator 113. In one embodiment, the second electrode 112 is a negative electrode plate formed of copper (e.g., a copper foil), and the second active material is formed of graphite. The separator 113 is disposed between the first electrode 111 and the second electrode 112. The separator 113 may be substantially disposed on both side surfaces of the first electrode 111, or on both side surfaces of the second electrode 112. The separator 113 is disposed at the outermost portion of the electrode assembly 110 to prevent or substantially prevent a predetermined region of the electrode assembly 110 from forming a short circuit with the case 120, the cap plate 150, and the safety member 160. The separator 113 may be formed of polyethylene (PE), polypropylene (PP), or an equivalent thereof, which is porous.

The case 120, in one embodiment, includes two wide side surfaces 121 a and 121 b, two narrow side surfaces 122a and 122b, and a bottom surface 123, and has an open upper portion. The case 120 accommodates the electrode assembly 110 and electrolyte (not shown). In one embodiment, the first and second non-coating portions 111a and 112a of the electrode assembly 110 are directed toward the two narrow side surfaces 122a and 122b, respectively. The case 120 may be formed of aluminum, copper, iron, SUS (e.g., stainless steel prescribed in the Japanese Industrial Standard), ceramic, polymer, or an equivalent thereof.

The first electrode terminal 130, in one embodiment, includes a first extension part 131, a second extension part 132, a welding part 133, a bolt extension part 134, and a nut 135. The first extension part 131 is disposed at a first side of the electrode assembly 110. The second extension part 132 extends from an upper portion of the first extension part 131. The welding part 133 extends from a portion of the first extension part 131, and is inserted with a predetermined depth into the first electrode 111 of the electrode assembly 110 (e.g., into the first non-coating portion 111 a). The welding part 133, in one embodiment, is welded to the first non-coating portion 111a. The bolt extension part 134 extends from the second extension part 132, passes through the cap plate 150, and protrudes outward. The nut 135 is coupled to the bolt extension part 134 to securely fix the first electrode terminal 130 to the cap plate 150.

The second electrode terminal 140, in one embodiment, includes a first extension part 141, a second extension part 142, a welding part 143, a bolt extension part 144, and a nut 145. The first extension part 141 is disposed at a second side (e.g., a side opposite the first side) of the electrode assembly 110. The second extension part 142 extends from an upper portion of the first extension part 141. The welding part 143 extends from a portion of the first extension part 141, and is inserted with a predetermined depth into the second electrode 112 of the electrode assembly 110 (e.g., into the second non-coating portion 112a). The welding part 143, in one embodiment, is welded to the second non-coating portion 112a. The bolt extension part 144 extends from the second extension part 142, passes through the cap plate 150, and protrudes outward. The nut 145 is coupled to the bolt extension part 144 to securely fix the second electrode terminal 140 to the cap plate 150.

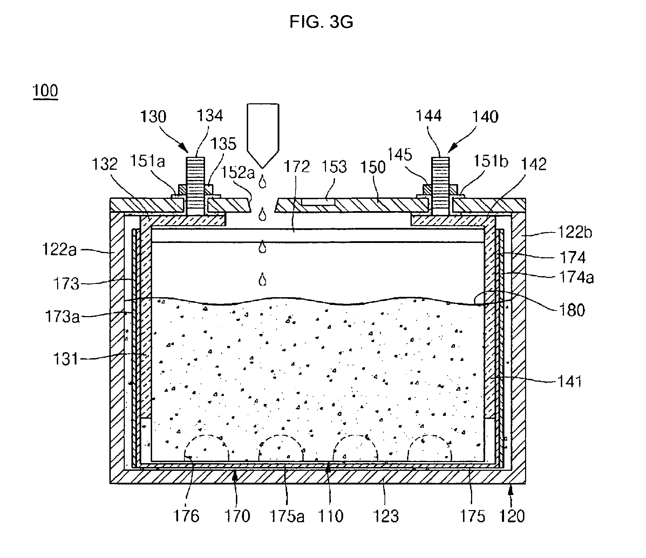

The cap plate 150, in one embodiment, includes insulating materials 151 a and 151 b, an electrolyte cap 152, and a safety vent 153. The cap plate 150 covers the case 120 such that the first and second electrode terminals 130 and 140 protrude outward. The cap plate 150, in one embodiment, is welded (e.g., laser welded) to the case 120. The insulating materials 151a and 151b, in one embodiment, are disposed at the first and second electrode terminals 130 and 140 on the outer circumference of the bolt extension parts 134 and 144, respectively. The electrolyte cap 152 is configured to close an electrolyte injection hole 152a (see FIG. 3G). The safety vent 153 may have a relatively small thickness in the cap plate 150. The cap plate 150 may be formed of a same material as the case 120. The insulating materials 151 a and 151 b electrically insulate the first and second electrode terminals 130 and 140 from the cap plate 150. In one embodiment, the case 120 and the cap plate 150 are electrically neutral. That is, the case 120 and the cap plate 150 have no pole (i.e. no positive or negative pole). However, in other embodiments, the case 120 and the cap plate 150 may have poles (i.e. function as a positive or negative terminal).

The safety member 160, in one embodiment, includes a first conductive plate 161, a second conductive plate 162, and an insulating film 163 disposed between the first conductive plate 161 and the second conductive plate 162. The safety member 160 is disposed between the electrode assembly 110 and the case 120. The safety member 160, in one embodiment, is disposed between the electrode assembly 110 and at least one wide side surface 121 a of the case 120. The first conductive plate 161 is electrically connected to the first electrode 111. That is, the first conductive plate 161 is welded to the first electrode 111. The second conductive plate 162 is electrically connected to the second electrode 112. That is, the second conductive plate 162 is welded to the second electrode 112. The insulating film 163 prevents or substantially prevents a short circuit between the first conductive plate 161 and the second conductive plate 162 until the safety member 160 operates. Accordingly, when a material, such as a nail, penetrates or crushes the secondary battery 100, the insulating film 163 is torn or damaged to cause a short circuit between the first and second conductive plates 161 and 162 of the safety member 160. In one embodiment, the first conductive plate 161 and the second conductive plate 162 of the safety member 160 have small electrical resistance and, therefore, do not generate substantial heat when a short circuit occurs, and quickly consume a large current. Accordingly, when the secondary battery 100 is penetrated or crushed, substantial heat is not generated, thereby improving safety and reliability of the secondary battery 100.

The insulating bag 170, in one embodiment, has a pocket shape with an open upper portion. The insulating bag 170 is disposed between the electrode assembly 110 and the case 120. The insulating bag 170, in one embodiment, is formed of an insulating material, such as polypropylene (PP).

In one embodiment, the insulating bag 170 includes a first side surface part 171, a second side surface part 172, a third side surface part 173, a fourth side surface part 174, a lower surface part 175, and electrolyte communication holes 176.

The first side surface part 171 has a plate shape extending from a first side to a second side. The first side surface part 171 is disposed between the electrode assembly 110 and the wide side surface 121 a of the case 120.

The second side surface part 172 has a plate shape extending from the first side to the second side. The second side surface part 172 is disposed between the electrode assembly 110 and the wide side surface 121b of the case 120 and faces the first side surface part 171.

The third side surface part 173 connects a first side end of the first side surface part 171 to a first side end of the second side surface part 172. In one embodiment, the third side surface part 173 includes a sealing part 173a, a first sub-side surface part 173b extending from the sealing part 173a to the first side surface part 171, and a second sub-side surface part 173c extending from the sealing part 173a to the second side surface part 172.

The fourth side surface part 174 connects a second side end of the first side surface part 171 to a second side end of the second side surface part 172. In one embodiment, the fourth side surface part 174 includes a sealing part 174a, a first sub-side surface part 174b extending from the sealing part 174a to the first side surface part 171, and a second sub-side surface part 174c extending from the sealing part 174a to the second side surface part 172.

In one embodiment, an upper end 170a of the insulating bag 170, that is, the upper ends of the first side surface part 171, the second side surface part 172, the third side surface part 173, and the fourth side surface part 174, is higher than an upper end 110a of the electrode assembly 110. That is, the upper end 110a of the electrode assembly 110 is spaced a distance D1 from the upper ends of the first side surface part 171, the second side surface part 172, the third side surface part 173, and the fourth side surface part 174. Thus, the insulating bag 170 prevents or substantially prevents the upper portion 110a of the electrode assembly 110 from forming a short circuit with the case 120.

The lower surface part 175 extends from the lower end of the first side surface part 171, the lower end of the second side surface part 172, the lower end of the third side surface part 173, and the lower end of the fourth side surface part 174. In one embodiment, a bent part 175a extends from the first side to the second side at a center portion of the lower surface part 175.

The electrolyte communication holes 176 are formed as through holes in a lower portion of the insulating bag 170. In one embodiment, the electrolyte communication holes 176 extend from the lower surface part 175 to lower portions of the first side surface part 171 and the second side surface part 172. Upper ends 176a of the electrolyte communication holes 176 are lower than a lower end 160a of the safety member 160. That is, the upper ends 176a of the electrolyte communication holes 176 are spaced a distance D2 from the lower end 160a of the safety member 160. Thus, the insulating bag 170 prevents or substantially prevents the safety member 160 from forming a short circuit with the case 120.

Hereinafter, a method of manufacturing a secondary battery will now be described according to an embodiment of the present invention.

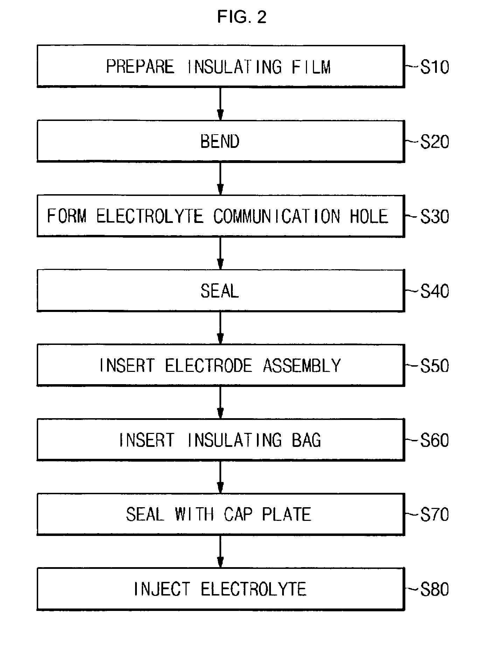

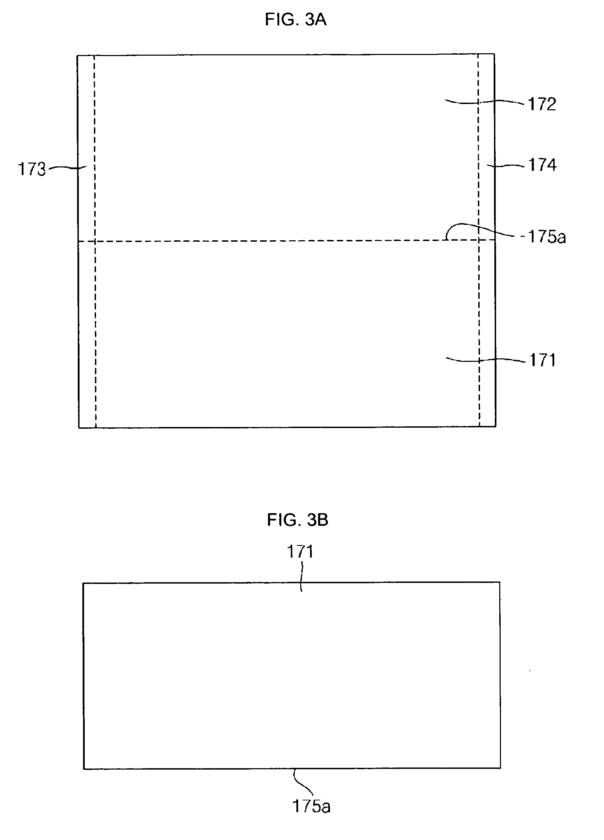

FIG. 2 is a flowchart illustrating a method of manufacturing a secondary battery according to an embodiment of the present invention. FIGS. 3A through 3G are schematic views illustrating a method of manufacturing a secondary battery.

Referring to FIG. 2, a method of manufacturing a secondary battery includes an insulating film preparing operation S10, a bending operation S20, an electrolyte communication hole forming operation S30, a sealing operation S40, an electrode assembly inserting operation S50, and an insulating bag inserting operation S60. The method of manufacturing a secondary battery may further include a cap plate sealing operation S70 and an electrolyte injecting operation S80.

Referring to FIGS. 2 and 3A, in the insulating film preparing operation S10, an insulating film having a generally tetragonal shape is prepared. The insulating film, in one embodiment, is formed of polypropylene (PP) or any other suitable material that is not oxidized by the electrolyte.

Referring to FIGS. 2 and 3B, in the bending operation S20, the insulating film is folded in half to form the bent part 175a.

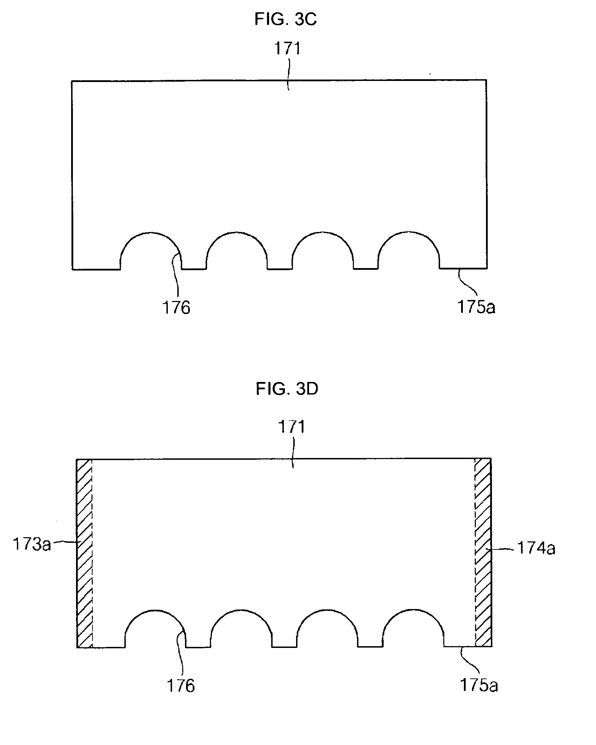

Referring to FIGS. 2 and 3C, in the electrolyte communication hole forming operation S30, the bent part 175a of the insulating film is cut having one or more generally semicircular shapes to form the electrolyte communication holes 176. Accordingly, the electrolyte communication holes 176 have generally circular shapes when the insulating film is unfolded.

Referring to FIGS. 2 and 3D, in the sealing operation S40, first and second side ends of the bent insulating film are sealed to form the insulating bag 170 having a pocket shape with an open upper portion. Through the sealing, the sealing part 173a of the third side surface part 173 and the sealing part 174a of the fourth side surface part 174 are formed. The sealing, in one embodiment, is performed through a heat welding process but, in other embodiments, may be performed by any other suitable process.

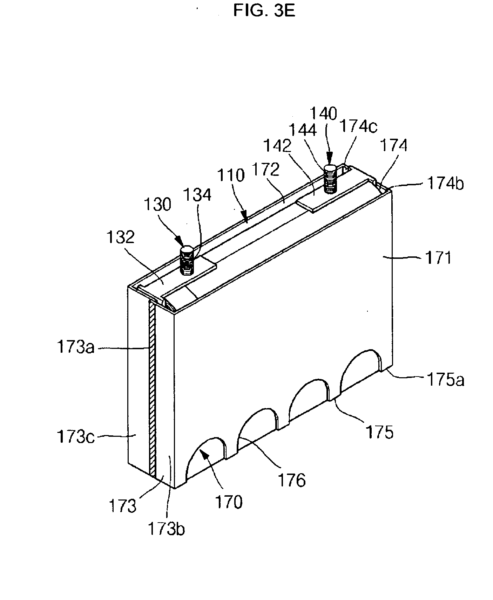

Referring to FIGS. 2 and 3E, in the electrode assembly inserting operation S50, the electrode assembly 110 is inserted into the inner space of the insulating bag 170.

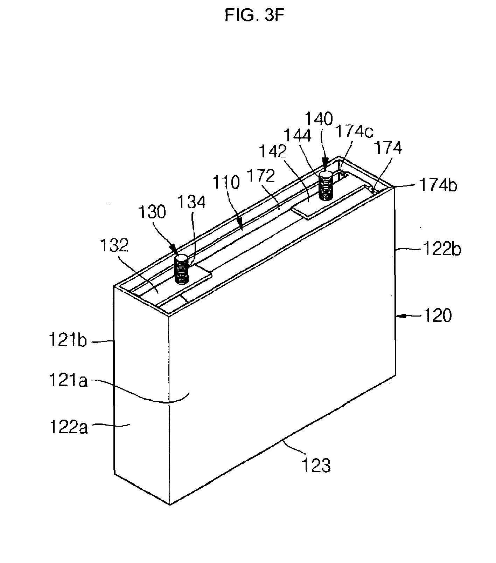

Referring to FIGS. 2 and 3F, in the insulating bag inserting operation S60, the insulating bag 170 accommodating the electrode assembly 110 is inserted into the case 120.

Referring to FIGS. 2 and 3G, in the cap plate sealing operation S70, the upper portion of the case 120 is sealed with the cap plate 150. In one embodiment, the bolt extension parts 134 and 144 of the electrode assembly 110 pass through the cap plate 150, and protrude outward to the outside of the case 120.

In the electrolyte injecting operation S80, electrolyte 180 is injected into the case 120 through the electrolyte injection hole 152a of the cap plate 150. Since the electrolyte communication holes 176 are disposed in the lower portion of the first side surface part 171 and the lower portion of the second side surface part 172, the electrolyte 180 is uniformly introduced to the inside and outside of the insulating bag 170, compared to a case where the electrolyte communication holes 176 are disposed only in the lower surface part 175. The electrolyte 180, in one embodiment, includes a lithium salt and a non-aqueous organic solvent, and may further include an additive for improving charge/discharge characteristics and preventing or reducing overcharging. The lithium salt functions as a source for supplying lithium ions in a cell, so that a basic operation of a lithium cell can be performed. The non-aqueous organic solvent functions as a medium through which ions participating in an electrochemical reaction of a cell can migrate. The lithium salt may be formed by mixing at least one selected from the group composed of LiPF₆, LiBF₄, LiSbF₆, LiAsF₆, LiClO₄, LiCF₃SO₃, Li(CF₃SO₂)₂N, LiC₄F₉SO₃, LiAlO₄, LiAlCl₄, LiN(CₓF₂ₓ+1SO₂)(C_{y}F_{2y}+1SO₂)(where x and y are natural numbers), LiCl, and Lil. The non-aqueous organic solvent may include carbonate, ester, or ether. The non-aqueous organic solvent has high permittivity (polarity) and low viscosity to increase the degree of dissociation of ions and facilitate the transport of ions. For example, at least two mixed solvents may be used, which include a solvent having high permittivity and high viscosity and a solvent having low permittivity and low viscosity. After the injecting of the electrolyte 180 is completed, the electrolyte injection hole 152a is closed with the electrolyte cap 152.

Hereinafter, a method of manufacturing a secondary battery will now be described according to another embodiment of the present invention.

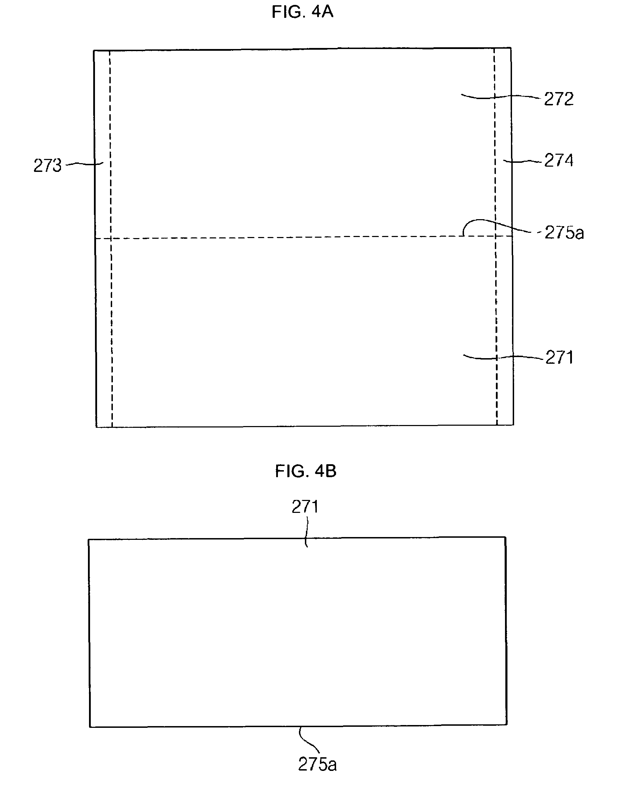

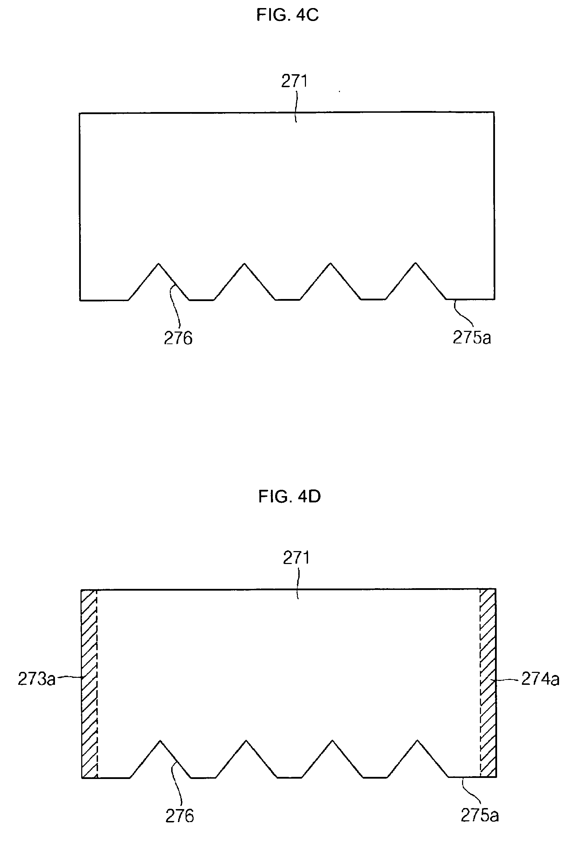

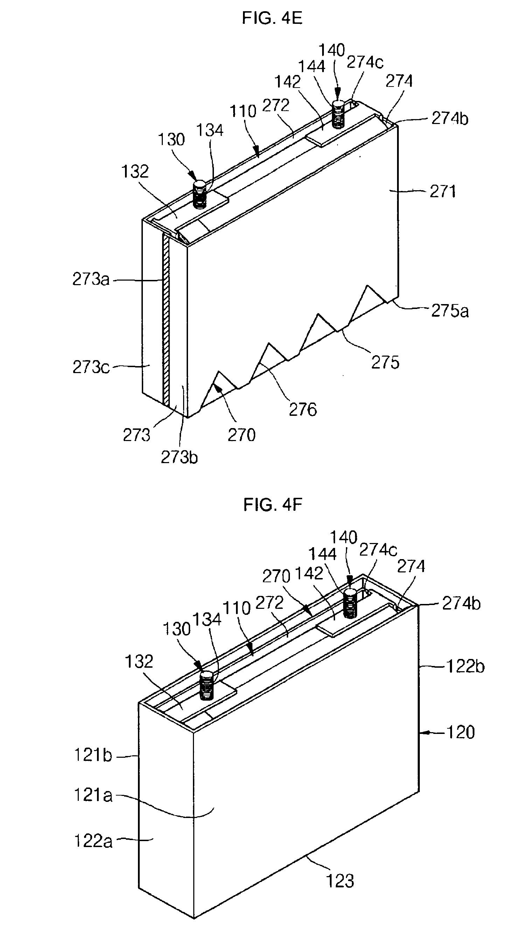

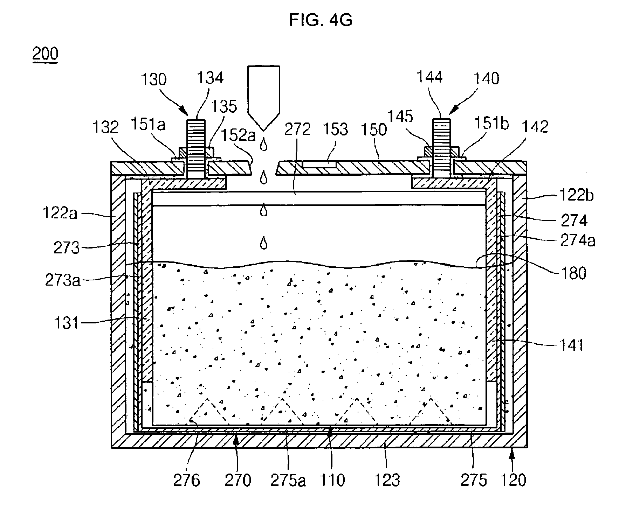

As described above, FIG. 2 is a flowchart illustrating a method of manufacturing a secondary battery according to an embodiment of the present invention. FIGS. 4A through 4G are schematic views illustrating a method of manufacturing a secondary battery.

Referring to FIG. 2, and FIGS. 4A through 4G, a method of manufacturing a secondary battery 200 having an insulating bag 270 having electrolyte communication holes 276 according to one embodiment is different from the method illustrated in FIGS. 3A through 3G of forming the secondary battery 100 having the insulating bag 170 having the electrolyte communication holes 176. The method of manufacturing the secondary battery 200 will now be described with respect to the electrolyte communication holes 276 of the insulating bag 270. Descriptions of identical and similar parts to those of the secondary battery 100 with reference to FIGS. 3A through 3G will be omitted.

Referring to FIGS. 2 and 4C, in the electrolyte communication hole forming operation S30, a bent part 275a of an insulating film is cut in one or more generally triangular shapes to form the electrolyte communication holes 276. Accordingly, the electrolyte communication holes 276 have generally lozenge shapes, that is, generally tetragonal shapes, when the insulating film is unfolded. As such, the shapes of the electrolyte communication holes 276 may be varied and, in other embodiments, the electrolyte communication holes may be formed having any other suitable shapes.

The secondary battery includes the insulating bag manufactured by bending and sealing the single insulating film. Thus, the method of manufacturing the secondary battery is simple. Since the secondary battery includes the electrolyte communication holes in the lower portion of the insulating bag, when the electrolyte is injected into the case, the electrolyte can be uniformly injected to the inside and outside of the insulating bag. Thus, the secondary battery has high electrolyte injecting efficiency, thereby reducing process time.

## Claims

1. A secondary battery (100) comprising:
an electrode assembly (110) comprising a first electrode (111), a second electrode (112), and a separator (113) between the first and second electrodes;
an insulating bag (170) accommodating the electrode assembly and a plurality of electrolyte communication holes (176) formed in a lower portion of the insulating bag; and
a case (120) accommodating the electrode assembly and the insulating bag, wherein the lower portion of the insulating bag (170) is positioned next to a bottom surface (123) of the case (120);
a cap plate (150) sealing the case (120); and
a safety member (160) between the electrode assembly and the insulating bag, wherein the safety member comprises:
a first conductive plate (161) electrically connected to the first electrode of the electrode assembly;
a second conductive plate (162) electrically connected to the second electrode of the electrode assembly; and
an insulating film (163) between the first and second conductive plates, **characterized in that** the electrolyte communication holes of the insulating bag have upper ends (176a) protruding toward the cap plate (150) that are lower than a lower end (160a) of the safety member protruding toward the bottom surface (123) of the case (120).

2. The secondary battery as claimed in claim 1, wherein the insulating bag comprises:
a first side surface part (171) between the electrode assembly and a wide side surface of the case;
a second side surface part (172) facing the first side surface part and between the electrode assembly and another wide side surface of the case; and
a lower surface part (175) connecting a lower end of the first side surface part to a lower end of the second side surface part and positioned next to the bottom surface (123) of the case (120).

3. The secondary battery as claimed in claim 2, wherein the electrolyte communication holes extend from the lower surface part to the first and second side surface parts.

4. The secondary battery as claimed in claim 2 or 3, wherein the insulating bag further comprises:
a third side surface part (173) connecting a first side end of the first side surface part to a first side end of the second side surface part; and
a fourth side surface part (174) connecting a second side end of the first side surface part to a second side end of the second side surface part.

5. The secondary battery as claimed in claim 4, wherein the third and fourth side surface parts comprise:
a sealing part (173a, 174a) located at a center portion;
a first sub-side surface part (173b, 174b) extending from the sealing part to the first side surface part; and
a second sub-side surface part (173c, 174c) extending from the sealing part to the second side surface part.

6. The secondary battery as claimed in claim 4, wherein the first side surface part, the second side surface part, the third side surface part, and the fourth side surface part each has an upper end that is higher than an upper end of the electrode assembly.

7. The secondary battery as claimed in any one of the preceding claims, wherein the electrolyte communication holes have at least one of a tetragonal shape or a circular shape when the insulating bag is unfolded.

8. The secondary battery as claimed in claim 1, wherein the insulating bag comprises or consists of polypropylene (PP).

9. A method of manufacturing a secondary battery according to any one of claims 1 through 8, the method comprising:
preparing an insulating film;
bending the insulating film;
forming a plurality of electrolyte communication holes in a bent part of the insulating film;
sealing side end parts of the bent insulating film to form an insulating bag having a pocket shape and an open upper portion;
inserting an electrode assembly into the insulating bag, the electrode assembly including a first electrode, a second electrode, and a separator between the first and second electrodes; and
inserting the insulating bag and the electrode assembly into a case.

10. The method as claimed in claim 9, wherein the sealing is performed through a heat welding process.

11. The method as claimed in claim 9 or 10, wherein, in the forming of the electrolyte communication holes, the electrolyte communication holes are formed by cutting the bent part of the insulating film in at least one of a semicircle, a triangle, or a tetragon.

12. The method as claimed in any one of claims 9 through 11, further comprising, after the inserting of the insulating bag and the electrode assembly into the case, sealing the case with a cap plate having an electrolyte injection hole and, after the sealing of the case with the cap plate, injecting an electrolyte into the case through the electrolyte injection hole of the cap plate.

## Patentansprüche

1. Sekundärbatterie (100), aufweisend:
eine Elektrodenanordnung (110), die eine erste Elektrode (111), eine zweite Elektrode (112) und einen Separator (113) zwischen der ersten und zweiten Elektrode aufweist;
eine Isoliertasche (170), die die Elektrodenanordnung und eine Vielzahl von Elektrolyt-Verbindungslöchem (176) aufweist, die in einem unteren Abschnitt der Isoliertasche ausgebildet sind; und
ein Gehäuse (120), das die Elektrodenanordnung und die Isoliertasche aufnimmt, wobei der untere Abschnitt der Isoliertasche (170) nahe einer Unterseite (123) des Gehäuses (120) positioniert ist;
eine Abdeckplatte (150), die das Gehäuse (120) abdichtet; und
ein Sicherheitselement (160) zwischen der Elektrodenanordnung und der Isoliertasche, wobei das Sicherheitselement aufweiset:
eine erste leitende Platte (161), die mit der ersten Elektrode der Elektrodenanordnung elektrisch verbunden ist;
eine zweite leitende Platte (162), die mit der zweiten Elektrode der Elektrodenanordnung elektrisch verbunden ist; und
einen Isolierfilm (163) zwischen der ersten und zweiten leitenden Platte, **dadurch gekennzeichnet, dass** die Elektrolyt-Verbindungslöcher der Isoliertasche obere Enden (176a) aufweisen, die zur Abdeckplatte (150) hin vorragen und die tiefer liegen als ein unteres Ende (160a) des Sicherheitselements, das zur Unterseite (123) des Gehäuses (120) hin vorragt.

2. Sekundärbatterie Anspruch 1, wobei die Isoliertasche aufweist:
einen ersten Seitenflächenteil (171) zwischen der Elektrodenanordnung und einer Breitseitenfläche des Gehäuses;
einen zweiten Seitenflächenteil (172), der dem ersten Seitenflächenteil zugewandt ist, zwischen der Elektrodenanordnung und einer weiteren Breitseitenfläche des Gehäuses; und
einen Unterseitenteil (175), der ein unteres Ende des ersten Seitenflächenteils mit einem unteren Ende des zweiten Seitenflächenteils verbindet und nahe der Unterseite (123) des Gehäuses (120) positioniert ist.

3. Sekundärbatterie nach Anspruch 2, wobei sich die Elektrolyt-Verbindungslöcher vom Unterseitenteil zum ersten und zweiten Seitenflächenteil erstrecken.

4. Sekundärbatterie nach Anspruch 2 oder 3, wobei die Isoliertasche weiterhin aufweist:
einen dritten Seitenflächenteil (173), der ein erstes Seitenende des ersten Seitenflächenteils mit einem ersten Seitenende des zweiten Seitenflächenteils verbindet; und
einen vierten Seitenflächenteil (174), der ein zweites Seitenende des ersten Seitenflächenteils mit einem zweiten Seitenende des zweiten Seitenflächenteils verbindet.

5. Sekundärbatterie nach Anspruch 4, wobei der dritte und vierte Seitenflächenteil aufweisen:
einen Dichtungsteil (173a, 174a) der in einem mittleren Abschnitt positioniert ist;
einen ersten Teilseitenflächenteil (173b, 174b), der sich vom Dichtungsteil zum ersten Seitenflächenteil erstreckt; und
einen zweiten Teilseitenflächenteil (173c, 174c), der sich vom Dichtungsteil zum zweiten Seitenflächenteil erstreckt.

6. Sekundärbatterie nach Anspruch 4, wobei der erste Seitenflächenteil, der zweite Seitenflächenteil, der dritte Seitenflächenteil und der vierte Seitenflächenteil jeweils ein oberes Ende aufweisen, das höher als ein oberes Ende der Elektrodenanordnung liegt.

7. Sekundärbatterie nach einem der vorhergehenden Ansprüche, wobei die Elektrolyt-Verbindungslöcher eine tetragonale Form und/oder eine Kreisform aufweisen, wenn die Isoliertasche umgefaltet ist.

8. Sekundärbatterie nach Anspruch 1, wobei die Isoliertasche Polypropylen (PP) aufweist oder daraus besteht.

9. Verfahren zur Herstellung einer Sekundärbatterie nach einem der Ansprüche 1 bis 8, wobei das Verfahren aufweist:
Herstellen eines Isolierfilms;
Biegen des Isolierfilms;
Ausbilden einer Vielzahl von Elektrolyt-Verbindungslochem in einem gebogenen Teil des Isolierfilms;
Abdichten von Seitenendteilen des gebogenen Isolierfilms zur Ausbildung einer Isoliertasche, die eine Taschenform und einen offenen oberen Abschnitt aufweiset;
Einführen einer Elektrodenanordnung in die Isolliertasche, wobei die Elektrodenanordnung eine erste Elektrode, eine zweite Elektrode und einen Separator zwischen der ersten und zweiten Elektrode aufweist; und
Einführen der Isoliertasche und der Elektrodenanordnung in ein Gehäuse.

10. Verfahren nach Anspruch 9, wobei das Abdichten durch ein Warmschweißverfahren durchgeführt wird.

11. Verfahren nach Anspruch 9 oder 10, wobei bei der Ausbildung der Elektrolyt-Verbindungslöcher die Elektrolyt-Verbindungslöcher durch Schneiden des gebogenen Teils des Isolierfilms in einen Halbkreis und/oder ein Dreieck und/oder ein Viereck ausgebildet werden.

12. Verfahren, nach einem der Ansprüche 9 bis 11, weiterhin aufweisend das Abdichten des Gehäuses mit einer Abdeckplatte, die ein Elektrolyt-Injektionsloch aufweist, nach dem Einführen der Isoliertasche und der Elektrodenanordnung in das Gehäuse, und Injizieren eines Elektrolyts in das Gehäuse durch das Elektrolyt-Injektionsloch der Abdeckplatte nach dem Abdichten des Gehäuses mit der Abdeckplatte.

## Revendications

1. Batterie d'accumulateurs (100) comprenant :
un assemblage d'électrodes (110) comprenant une première électrode (111), une seconde électrode (112) et un séparateur (113) entre les première et seconde électrodes;
un sac isolant (170) recevant l'assemblage d'électrodes et une pluralité de trous de communication d'electrolyte (176) formés dans une partie inférieure du sac isolant ; et
un boîtier (120) recevant l'assemblage d'électrodes et le sac isolant, la partie inférieure du sac isolant (170) étant positionnée près d'une surface inférieure (123) du boîtier (120) ;
une plaque de couvercle (150) obturant hermétiquement le boîtier (120) ; et
un élément de sécurité (160) entre l'assemblage d'électrodes et le sac isolant, lendit élément de sécurité comprenant :
une première plaque conductrice (161) connectée électriquement à la première électrode de l'assemblage d'électrodes ;
une seconde plaque conductrice (162) connectée électriquement à la seconde électrode de l'assemblage d'électrodes ; et
un film isolant (162) entre les première et seconde plaques conductrices, **caractérisée en ce que** les trous de communication d'électrolyte du sac isolant ont des extrémités supérieures (176a) faisant saillie vers la plaque de couvercle (150) qui sont plus bas qu'une extrémité inférieure (160a) de l'élément de sécurité faisant saillie vers la surface inférieure (123) du boîtier (120).

2. Batterie d'accumulateurs suivant la revendication 1, dans laquelle le sac isolant comprend :
une première partie de surface latérale (171) entre l'assemblage d'électrodes et une surface latérale large du boîtier ;
une deuxième partie de surface latérale (172) faisant face à la première partie de surface latérale et entre l'assemblage d'électrodes et une autre surface latérale large du boîtier ; et
une partie de surface inférieure (175) connectant une extrémité inférieure de la première partie de surface latérale à une extrémité inférieure de la deuxième partie de surface latérale et positionnée près de la surface inférieure (123) du boîtier (120).

3. Batterie d'accumulateurs suivant la revendication 2, dans laquelle les trous de communication d'électrolyte s'étendent de la partie de surface inférieure aux première et seconde parties de surface latérale.

4. Batterie d'accumulateurs suivant la revendication 2 ou 3, dans laquelle le sac isolant comprend en outre :
une troisième partie de surface latérale (173) connectant une première extrémité latérale de la première partie de surface latérale à une première extrémité latérale de la deuxième partie de surface latérale ; et
une quatrième partie de surface latérale (174) connectant une seconde extrémité latérale de la première partie de surface latérale à une seconde extrémité latérale de la deuxième partie de surface latérale.

5. Batterie d'accumulateurs suivant la revendication 4, dans laquelle les troisième et quatrième partiels de surface latérale comprennent :
une partie d'étanchéité (173a, 174a) située au niveau d'une portion centrals ;
une première sous-partie de surface latérale (173b, 174b) s'étendant de la partie d'étanchéité à la première partie de surface latérale ; et
une seconde sous-partie de surface latérale (173c, 174c) s'étendant de la partie d'étanchéité à la deuxième partie de surface latérale.

6. Batterie d'accumulateurs suivant la revendication 4, dans laquelle la première partie de surface latérale, la deuxième partie de surface latérale, la troisième partie de surface latérale et la quatrième partie de latérale ont chacune une extrémité supérieure qui est plus haute qu'une extrémité supérieure de l'assemblage d'électrodes.

7. Batterie d'accumulateurs suivant l'une quelconque des revendications précédentes, dans laquelle les trous de communication d'électrolyte possédant au moins une d'une forme tétragonale et d'une forme circulaire lorsque le sac isolant est déplié.

8. Batterie d'accumulateurs suivant la revendication 1, dans laquelle le sac isolant comprend, ou consiste en, du polypropylène (PP).

9. Procédé pour la production d'une batterie d'accumulateurs suivant l'une quelconque des revendications 1 à 8, le procécé comprenant :
la préparation d'un film isolant ;
la flexion du film isolant ;
la formation d'une pluralité de trous de communication d'électrolyte dans une partie fléchie du film isolant ;
l'obturation hermétique des parties terminales latérales du film isolant fléchi pour former un sac isolant ayant une forme de poche et une portion supérieure ouverte ;
l'insertion d'un assemblage d'électrodes dans le sac isolant, l'assemblage d'électrodes comprenant une première électrode, une seconde électrode et un séparateur entre les première et seconde électrodes ; et
l'insertion du sac isolant et de l'assemblage d'électrodes dans un boîtier.

10. Procédé suivant la revendication 9, dans lequel l'obturation hermétique est effectuée par un Procédé de thermosoudage.

11. Procédé suivant la revendication 9 ou 10, dans lequel, lors de la formation des trous de communication d'électrolyte, les trous de communication d'electrolyte sont formés en coupant la partie fléchie du film isolant suivant au moins une forme semi-circulaire, triangulaire ou tétragonale.

12. Procédé suivant l'une quelconque des revendications 9 à 11, comprenant en outre, après l'insertion du sac isolant et de l'assemblage d'électrodes dans le boîtier, l'obturation hermétique du boîtier avec une plaque de couvercle ayant un trou d'injection d'électrolyte et, après obturation hermétique du boîtier avec la plaque de couvercle, l'injection d'un électrolyte dans le boîtier à travers le trou d'injection d'électrolyte de la plaque de couvercle.
